# EUROPEAN PATENT SPECIFICATION

(11) **EP 1 562 350 B1**
(45) Date of publication and mention of the grant of the patent: **15.11.2006**
(21) Application number: 05002289.6
(22) Date of filing: 03.02.2005
(51) Int. Cl.: H04L 29/08, H04L 29/06, H04L 12/28

(54) **Home network system for adjusting data transmission rate according to window state executed in client and method thereof**
Heimnetzwerksystem zur Anpassung der Übertragungsrate entsprechend Fensterstatus im Client und entsprechendes Verfahren.
Système de réseau domestique pour l'adaptation du débit de transmission en fonction du status des fenêtres dans le client et procédé correspondant.

(30) Priority: 06.02.2004 KR 2004007724
(43) Date of publication of application: 10.08.2005
(73) Proprietor: SAMSUNG ELECTRONICS CO., LTD., Suwon-si, Gyeonggi-do (KR)
(72) Inventor: Lee, Myung-kyu, Dongan-gu Anyang-si (KR)
(74) Representative: Grünecker, Kinkeldey, Stockmair & Schwanhäusser Anwaltssozietät

(56) References cited:
- EP-A- 0 738 953
- EP-A- 1 381 198
- WO-A-01/92973
- WO-A-03/025726

## Description

This application claims priority under 35 U.S.C. § 119 from Korean Patent Application No. 2004-7724, filed on February 6, 2004, the entire content of which is incorporated herein by reference.

### BACKGROUND OF THE INVENTION

### Field of the Invention

The present invention relates to a home network system and a method for adjusting a data transmission rate, and more particularly to a home network system and a method for adjusting a data transmission rate which can heighten the transmission efficiency of the whole home network by properly adjusting the transmission rate of data transmitted to a client.

### Description of the Related Art

Generally, a home network system means a network system that makes intellectualized communications between a home network installed in the home and an external communication network possible by performing a network matching between the home network and the external communication network. Through this networking, the sharing of information resources in the home and the utility of individual products can be maximized.

Home appliances that constitute the home network may be classified into information appliances such as a personal computer, a facsimile, a scanner and a printer, audio/video (A/V) appliances such as a television (TV) receiver, a set-top box, a DVD, a VCR, an audio appliance, a camcorder and a domestic game machine; control appliances such as a coffee maker, an electric rice cooker, a refrigerator, a washing machine, a microwave oven and a camera; and dummy appliances such as a remote controller, an interphone, a sensor and light sources. Such home appliances are connected to sub-networks such as telephone lines, wireless LAN, Bluetooth, USB (Universal Serial Bus), IEEE 1394 and power supply lines.

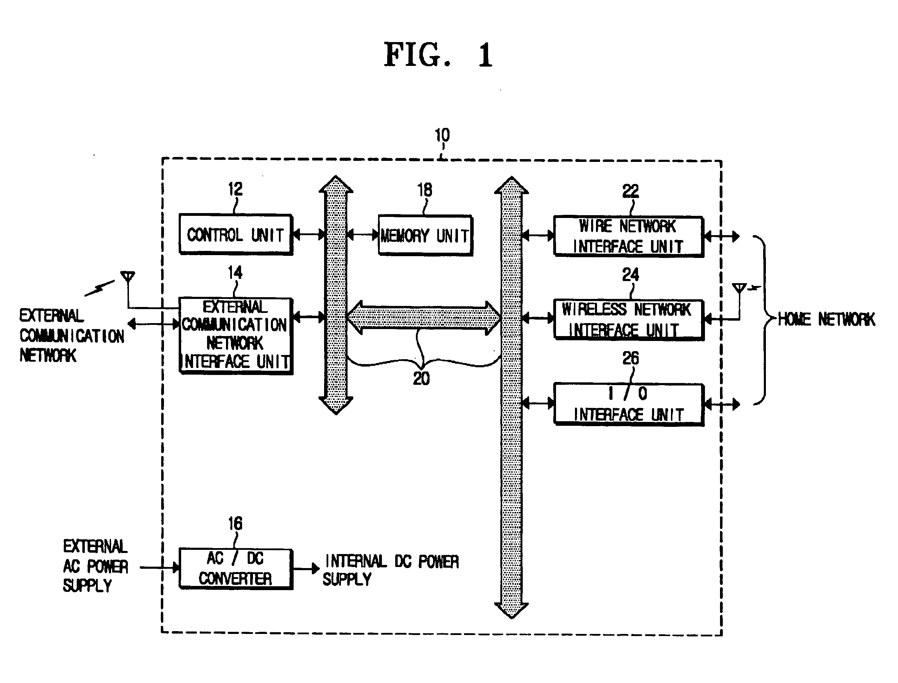

FIG. 1 is a block diagram illustrating an example of a conventional home network system.

Referring to FIG. 1, the conventional network system 10 includes a control unit 12, an external communication network interface unit 14, an alternating current/direct current (AC/DC) converter 16, a memory unit 18, a wire network interface unit 22, a wireless network interface unit 24 and an input/output (I/O) interface unit 26.

The external communication network interface unit 14 provides an interface for data communication by wire or wirelessly with an external communication network.

The AC/DC converter 16 converts an external AC power supply into a DC power supply used inside the home network system 10.

The wire network interface unit 22, the wireless network interface unit 24 and the I/O interface unit 26 provide interfaces for data communications with home appliances connected to the home network.

Here, the wire network interface unit 22 provides an interface with a home appliance connected to a sub-network such as USB and IEEE 1394, and the wireless network interface unit 24 provides an interface with a home appliance connected to a wireless network such as a wireless LAN and a Bluetooth. The I/O interface unit 26 provides an interface with RS-232C and PCMCIA cards.

The above-described modules are connected through a system bus 20, and the control unit controls the whole operation of the system. The memory unit 18 stores programs required for the system operation and data.

The conventional home network system 10 as described above only performs data communications between the external communication network and the home network that use different protocols.

Meanwhile, plural windows can be executed in each client such as a PC and a notebook computer, and data transmitted from the home network system 10 can be played/displayed in each window.

In this case, if the data played in the window refers to a moving picture having a large capacity in a state that the number of clients connected to the home network system 10 and the number of windows executed in the respective client are increased, the whole data transmission speed of the home network system is deteriorated due to the increase of the amount of transmitted data, and this causes the transmission efficiency to be reduced.
EP 1 381 198 A1 describes convergence layers for network devices and methods for transmitting data traffic.
WO 03/025726 A1 describes a centralized resource manager with a passive sensing system.
WO 01/92973 A2 describes a method and system for efficiently reducing graphical display data for transmission over low bandwidth transport protocol mechanisms.
EP 0 738 953 A2 describes a communication terminal, a supervisory system and a communication method.

### SUMMARY OF THE INVENTION

The present invention has been developed in order to solve the above drawbacks and other problems associated with the conventional arrangement. An aspect of the present invention is to provide to a home network system and a method of adjusting a data transmission rate which can heighten the transmission efficiency of the whole home network by adjusting the transmission rate of data transmitted to a client in accordance with the operation state of connected clients, the state of windows executed in the respective clients and the kind of data played in the respective windows.

The foregoing and other objects and advantages are substantially realized by providing a home network system that performs a network matching between an external communication network and a home network, according to an embodiment of the present invention, which comprises an external communication network interface unit for providing an interface for data communications with the external communication network, a home network interface unit for providing an interface for data communications with the home network, a storage unit for storing information about windows executed in clients that constitute the home network, and a transmission rate setting unit for setting a transmission rate of data to be played in the window with reference to the window information so that the data is transmitted to the client in which the window is executed at the set transmission rate.

The transmission rate setting unit may set the transmission rate of the data to be played in the window to a first transmission rate if the window is activated, and set the transmission rate of the data to be played in the window to either of a second transmission rate and a third transmission rate if the window is inactivated

In an exemplary embodiment, the first transmission rate is higher than the second transmission rate, and the second transmission rate is higher than the third transmission rate.

The transmission rate setting unit may set the transmission rate of the data according to a kind of the data to be played in the window.

Also, if the window is inactivated and the data to be played in the window is audio/video (AV) data that includes a video component, an audio component and a rest component, the transmission rate setting unit may set the transmission rate of the video component to the second transmission rate, set the transmission rate of the rest component to the first transmission rate, and set the audio component so that the audio component is not transmitted.

Also, if the window is inactivated and the data to be played in the window is audio data, the transmission rate setting unit may set the transmission rate of the audio data to any one of the first to third transmission rates.

Also, if the window is inactivated and the data to be played in the window is rest data, the transmission rate setting unit may set the transmission rate of the rest data to the first transmission rate.

The rest data may include at least one of text data and still image data.

Meanwhile, if the window is inactivated, a part of the window is covered with another window executed in the client, and the data to be played in the window is audio/video (AV) data that includes a video component, an audio component and a rest component, the transmission rate setting unit may set the transmission rate of the video component to the second transmission rate, set the transmission rate of the rest component to the first transmission rate, and set the audio component so that the audio component is not transmitted.

Also, if the window is inactivated, all parts of the window are covered with another window executed in the client, and the data to be played in the window is audio/video (AV) data that includes a video component, an audio component and a rest component, the transmission rate setting unit may set the transmission rate of the video component to the third transmission rate, set the transmission rate of the rest component to the first transmission rate, and set the audio component so that the audio component is not transmitted

Also, if the window is a minimized window and the data to be played in the window is audio/video (AV) data that includes a video component, an audio component and a rest component, the transmission rate setting unit may set the transmission rate of the video component to the third transmission rate, set the transmission rate of the rest component to the first transmission rate, and set the audio component so that the audio component is not transmitted.

Also, if the client operates in a screen saving mode and the data to be played in the window is audio/video (AV) data that includes a video component, an audio component and a rest component, the transmission rate setting unit may set the transmission rate of the video component to the third transmission rate, set the transmission rate of the rest component to the first transmission rate, and set the audio component so that the audio component is not transmitted.

In another aspect of the present invention, there is provided a method of adjusting a transmission rate of data to be transmitted to clients constituting a home network by a home network system that performs a network matching between an external communication network and a home network, according to an embodiment of the present invention, which comprises the steps of (a) receiving and storing information about windows executed in the clients from the clients constituting the home network, (b) setting the transmission rate of the data to be played in the window with reference to the window information, and (c) transmitting the data to the client in which the window is executed at the set transmission rate.

In an exemplary embodiment, the step (b) sets the transmission rate of the data to be played in the window to a first transmission rate if the window is activated, and sets the transmission rate of the data to be played in the window to either of a second transmission rate and a third transmission rate if the window is inactivated.

In an exemplary embodiment, the first transmission rate is higher than the second transmission rate, and the second transmission rate is higher than the third transmission rate.

The step (b) may set the transmission rate of the data according to a kind of the data to be played in the window.

Also, if the window is inactivated and the data to be played in the window is audio/video (AV) data that includes a video component, an audio component and a rest component, the step (b) may set the transmission rate of the video component to the second transmission rate, set the transmission rate of the rest component to the first transmission rate, and set the audio component so that the audio component is not transmitted.

Also, if the window is inactivated and the data to be played in the window is audio data, the step (b) may set the transmission rate of the audio data to any one of the first to third transmission rates.

Also, if the window is inactivated and the data to be played in the window is rest data, the step (b) may set the transmission rate of the rest data to the first transmission rate.

The rest data may include at least one of text data and still image data.

Meanwhile, if the window is inactivated, a part of the window is covered with another window executed in the client, and the data to be played in the window is audio/video (AV) data that includes a video component, an audio component and a rest component, the step (b) may set the transmission rate of the video component to the second transmission rate, set the transmission rate of the rest component to the first transmission rate, and set the audio component so that the audio component is not transmitted.

Also, if the window is inactivated, all parts of the window are covered with another window executed in the client, and the data to be played in the window is audio/video (AV) data that includes a video component, an audio component and a rest component, the step (b) may set the transmission rate of the video component to the third transmission rate, set the transmission rate of the rest component to the first transmission rate, and set the audio component so that the audio component is not transmitted.

Also, if the window is a minimized window and the data to be played in the window is audio/video (AV) data that includes a video component, an audio component and a rest component, the step (b) may set the transmission rate of the video component to the third transmission rate, set the transmission rate of the rest component to the first transmission rate, and set the audio component so that the audio component is not transmitted.

Also, if the client operates in a screen saving mode and the data to be played in the window is audio/video (AV) data that includes a video component, an audio component and a rest component, the step (b) may set the transmission rate of the video component to the third transmission rate, set the transmission rate of the rest component to the first transmission rate, and set the audio component so that the audio component is not transmitted

### BRIEF DESCRIPTION OF THE DRAWINGS

The above aspects and features of the present invention will be more apparent by describing certain exemplary embodiments of the present invention with reference to the accompanying drawings, in which:

FIG. 1 is a block diagram of a conventional home network system;

FIG. 2 is a view illustrating the construction of a home network according to an exemplary embodiment of the present invention;

FIG. 3 is a block diagram of the home network system of FIG. 2;

FIG. 4 is a view provided for explaining the operation of a transmission rate setting unit of FIG. 3;

FIG. 5 is a flowchart illustrating a method of adjusting a data transmission rate of the home network system according to an exemplary embodiment of the present invention;

FIGS. 6 to 8 are flowcharts illustrating the steps of setting a transmission rate of FIG. 5; and

FIG. 9 is a view illustrating an example of windows executed in the client.

### DETAILED DESCRIPTION OF THE EXEMPLARY EMBODIMENTS

Certain exemplary embodiments of the present invention will be described in greater detail with reference to the accompanying drawings.

The matters defined in the description such as a detailed construction and elements are nothing but the ones provided to assist in a comprehensive understanding of the invention. Thus, it is apparent that the present invention can be carried out without those defined matters. Also, well-known functions or constructions are not described in detail since they would obscure the invention in unnecessary detail.

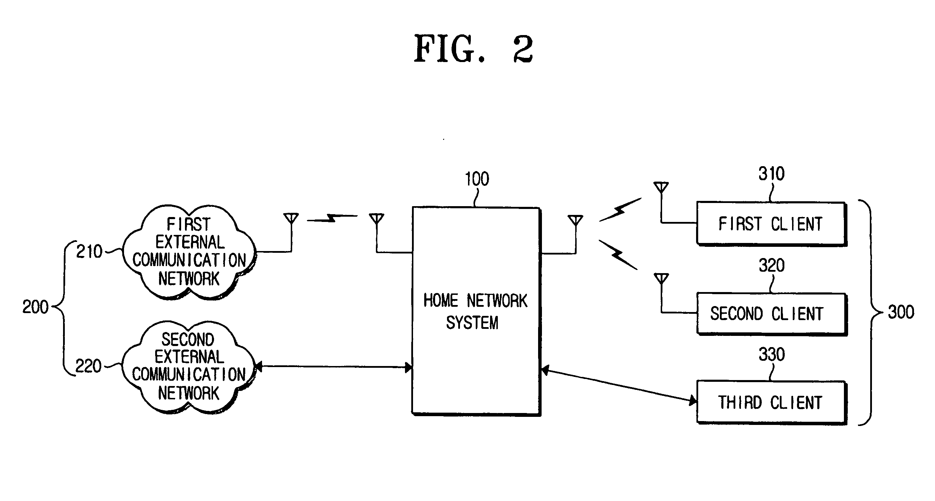

FIG. 2 is a view illustrating the construction of a home network according to an embodiment of the present invention. As shown in FIG. 2, the home network includes a home network system 100, external communication networks 200 and clients 300. Here, the home network system 100 performs a network matching between the clients 300 and the external communication networks 200.

The home network system 100 may be connected to the clients 300 and the external communication networks 200 by wire or wireless. In FIG. 2, the home network system 100 is connected to the first and second clients 310 and 320 and the first external communication network 210 by wireless, and is connected to the third client 330 and the second external communication network 220 by wire. However, this is merely exemplary, and the present invention is not limited thereto.

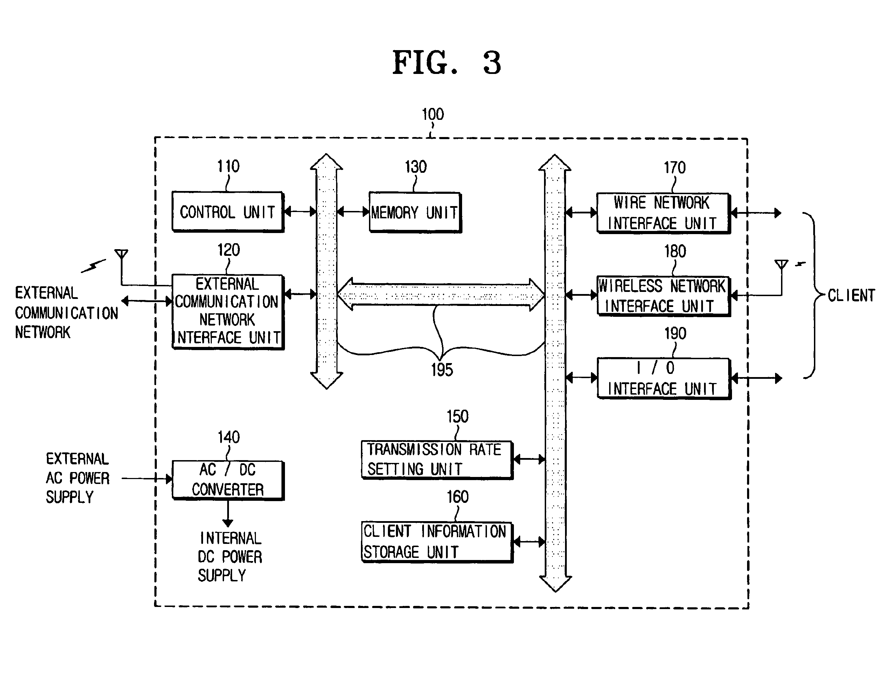

Hereinafter, the home network system 100 illustrated in FIG. 2 will be explained in detail with reference to FIG. 3.

Referring to FIG. 3, the home network system 100 includes a control unit 110, an external communication network interface unit 120, a memory unit 130, an AC/DC converter 140, a transmission rate setting unit 150, a client information storage unit 160, a wire network interface unit 170, a wireless network interface unit 180 and an I/O interface unit 190.

The external communication network interface unit 120 provides an interface for data communications with the external communication network.

The AC/DC converter 140 converts an external AC power supply into a DC power supply required in the home network system 100.

The wire network interface unit 170, the wireless network interface unit 180 and the I/O interface unit 190 provide interfaces with the clients that constitute the home network. That is, the wire network interface unit 170 provides an interface with USB, IEEE 1394, HomePNA, PLC and Ethernet, and the wireless network interface unit 180 provides a wireless interface with a wireless LAN, Bluetooth and UWB. The I/O interface unit 190 provides an interface with RS-232C, PCMCIA (Personal Computer Memory Card Interface Association) and infrared communication.

The above-described modules are connected through a system bus 195, and transmit/receive necessary data and control signals. The control unit 110 controls the whole operation of the system. The memory unit 130 stores programs and data required for the system operation. The memory unit 130 can be implemented by a Hard Disk Drive (HDD), DVD ROM, memory card, EEPROM, SDRAM and flash memory.

The client information storage unit 160 is a storage medium for storing information on client states and windows executed in the respective clients, which is received from the connected clients.

The client state means information about the client's current mode which may be either of i) a display mode for displaying the transmitted data on a display device and ii) a screen saving mode for not displaying the transmitted data on a display device in order to reduce the power consumption.

The window information includes i) window state information that indicates the state of the executed window and ii) a kind of transmitted data that indicates the kind of the data being currently played/displayed in the window.

The window state information includes information on i) whether the window executed in the client is an activated window or an inactivated window, ii) whether the window is covered with another window if the window is the inactivated window, iii) whether all parts of the window are covered or only a part of the window is covered if the window is covered with another window, and iv) whether the window is a minimized window.

The kind of transmitted data means information about the kind of the data being currently played/displayed in the window which may be i) AV data (i.e., moving image data), ii) audio data or iii) rest data. Here, the rest data is data that is neither the AV data nor the audio data, and that has a relatively small capacity. For example, the rest data may be text data and still image data.

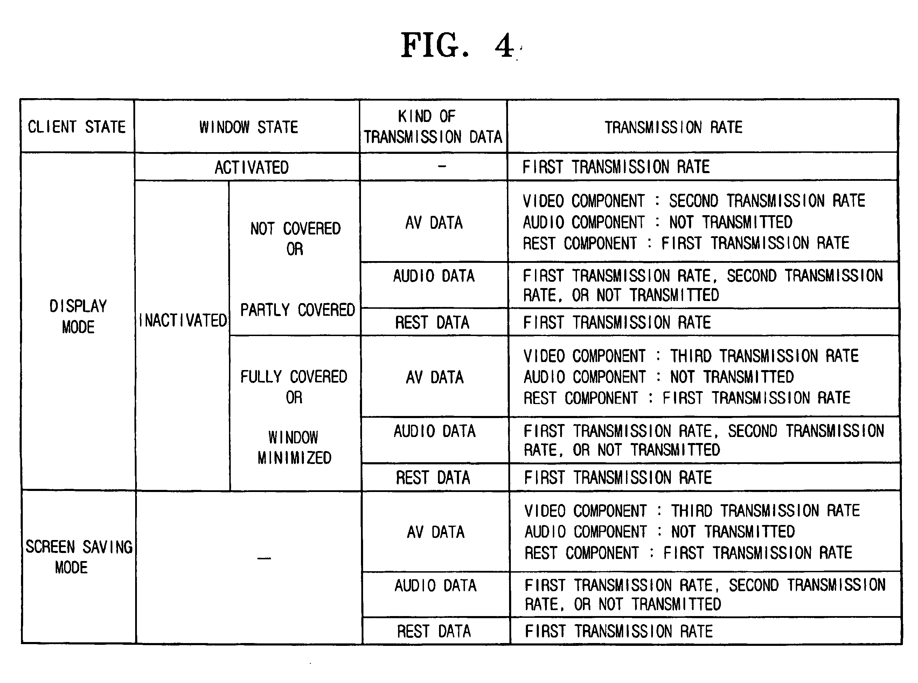

The transmission rate setting unit 150 sets the transmission rate of the data transmitted from the home network system 100 to the clients. Specifically, the transmission rate setting unit 150 sets the transmission rate of the data to be played/displayed in the respective windows executed in the respective clients to any one of the first to third transmission rates with reference to the 'client state' and 'window information (i.e., 'window state' and 'kind of transmitted data') stored in the client information storage unit 160. FIG. 4 illustrates a reference table by which the data transmission rate setting unit 150 sets the transmission rates.

In the 'transmission rate' as illustrated in FIG. 4, the first to third transmission rates are not fixed values, but values that can be manually set by the user or that can be automatically set by the transmission rate setting unit 150. However, in transmitting the data, the first transmission rate means the highest or optimum transmission rate, and the third transmission rate means the lowest transmission rate. The second transmission rate means a value between the first transmission rate and the third transmission rate.

If the client operates in a display mode, the transmission rate setting unit 150 sets the transmission rate of the data being played/displayed in the activated window to the first transmission rate irrespective of the kind of the data. This is because the data being played/displayed in the activated window is a matter of user's primary concern.

If the data played in the window, which is inactivated and which is not covered with another window or a part of which is covered with another window, is audio/video (AV) data that includes a video component, an audio component and a rest component, the transmission rate setting unit 150 sets the transmission rate of the video component to the second transmission rate, sets the transmission rate of the rest component to the first transmission rate, and sets the audio component so that the audio component is not transmitted.

Also, if the data played in the window, which is inactivated and all parts of which are covered with another window, or which is a minimized window is AV data, the transmission rate setting unit 150 sets the transmission rate of the video component to the third transmission rate, sets the transmission rate of the rest component to the first transmission rate, and sets the audio component so that the audio component is not transmitted.

The data being played/displayed in the inactivated window or in the minimized window is not a matter of user's primary concern. Accordingly, if the transmission rate of the data being played is relatively lowered, the transmission efficiency of the whole home network can be heightened.

For this, the transmission rate setting unit 150 lowers the transmission rate of the video component having a relatively large capacity among the components of the AV data being played in the inactivated window or the minimized window.

In this case, although the resolution of the image being played is deteriorated as the data transmission rate of the video component is decreased, this is not a matter of user's primary concern, and thus does not cause a great inconvenience to the user.

The home network system 100 transmits the video component being played/displayed in the window which is inactivated and all parts of which are covered with another window or the minimized window at the lowest transmission rate since the window is not shown to the user. If the window is not covered with another window or only a part of the window is covered with another window, the video component being played/displayed in the window is shown to the user, and thus it is transmitted at the second transmission rate that is an intermediate transmission rate.

Meanwhile, the audio component of the AV data is not transmitted, and this is to prevent the output audio component from being overlapped. However, if there is no window that outputs the audio data or if the user desires to make the overlapping audio data being outputted, the audio component may be transmitted and outputted, and the transmission rate of the audio component can also be adjusted.

The rest component (for example, text component or still image component) of the AV data is transmitted at the first transmission rate, and since the rest component has a small capacity, it does not affect the transmission efficiency of the whole home network greatly even if it is transmitted at a high transmission rate.

If the data being played/displayed in the inactivated window is the audio data, the home network system 100 determines whether to transmit the audio data with reference to the state of other windows. Unlike the video data, if several audio data are simultaneously played, the user cannot understand at all.

Also, if the data being played/displayed in the inactivated window is the rest data (for example, text component or still image component), the home network system 100 transmits the rest data at the first transmission efficiency, and since the rest component has a small capacity, it does not affect the transmission rate of the whole home network greatly even if it is transmitted at a high transmission rate.

Meanwhile, if the client operates in a screen saving mode, neither of the activated window and the inactivated window is shown to the user, the data being played/displayed in all the windows are processed at the same transmission rate as the case that all parts of the window are covered or that the window is minimized.

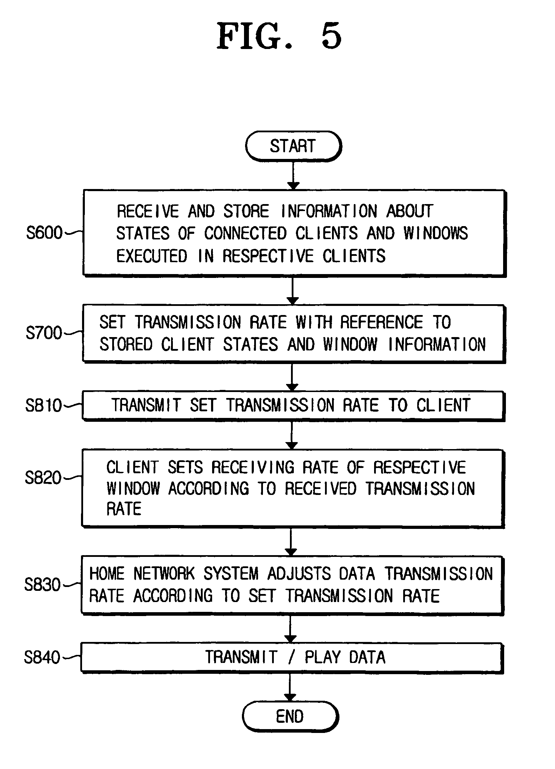

Hereinafter, the method of adjusting the transmission rate of the home network system as shown in FIG. 3 will be explained in detail with reference to FIG. 5.

Referring to FIG. 5, the home network system 100 first receives information about the client states and windows executed in the respective clients from the connected clients, and stores the information in the client information storage unit 160 (S600).

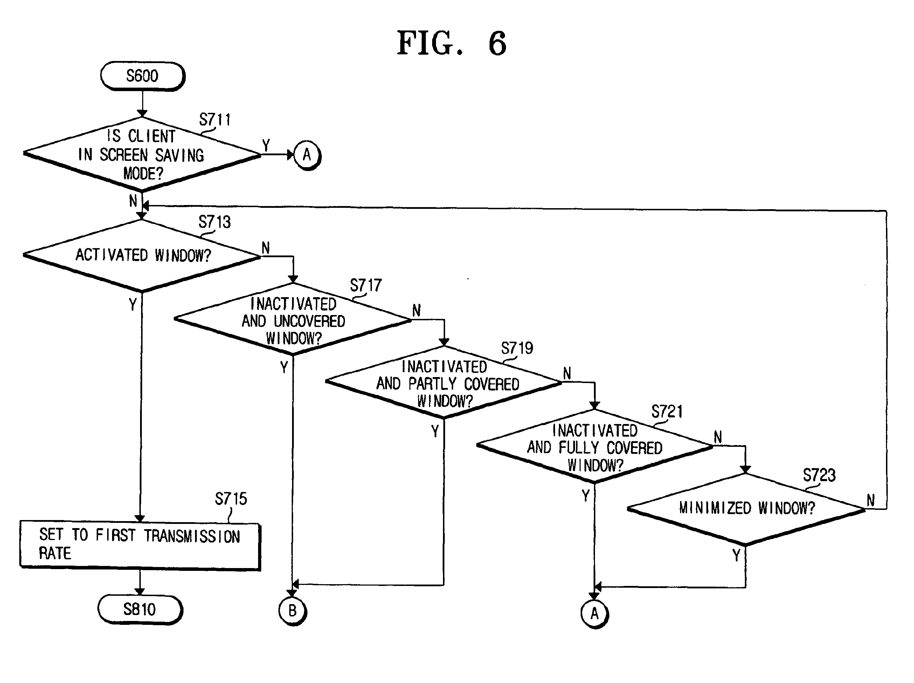

If the storage of the information received of the connected clients is completed, the transmission rate setting unit 150 of the home network system 100 sets the transmission rate of the data to be played/displayed in the respective window with reference to the information about the client states and the windows executed in the respective clients stored in the client information storage unit 160 (S700). Hereinafter, the step S700 that is the step of setting the transmission rate will be explained with reference to FIGS. 6 to 9.

The transmission rate setting unit 150 judges whether the client is operating in a display mode or in a screen saving mode (S711).

If it is judged at the step S711 that the client does not operate in the screen saving mode, in other words, that the client operates in the display mode, the transmission rate setting unit 150 judges whether the window executed in the client is an activated window or an inactivated window (S713).

If it is judged at the step S713 that the window executed in the client is the activated window, the transmission rate setting unit 150 sets the transmission rate of the data being played/displayed in the window to the first transmission rate (S715).

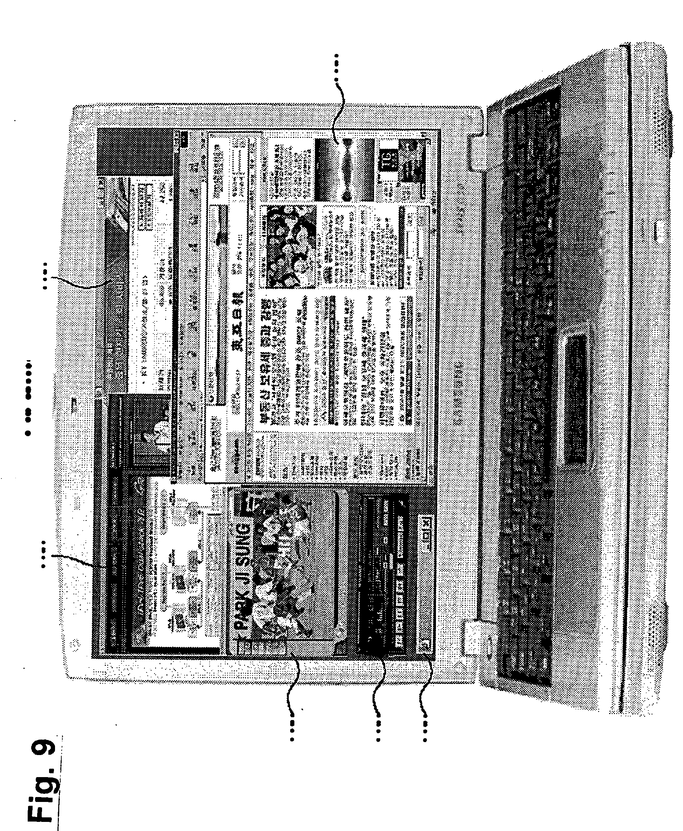

FIG. 9 is a view illustrating an example of windows executed in the client. Referring to FIG. 9, the first window 910 corresponds to an activated window, and the text data and the still image data being displayed in the first window 910 are transmitted at the first transmission rate.

On the contrary, if it is judged at the step S713 that the window executed in the client is the inactivated window, the transmission rate setting unit 150 judges whether the window is not covered with another window (S717), and if it is judged that the window is covered with another window, it further judges whether only a part of the window is covered with another window (S719).

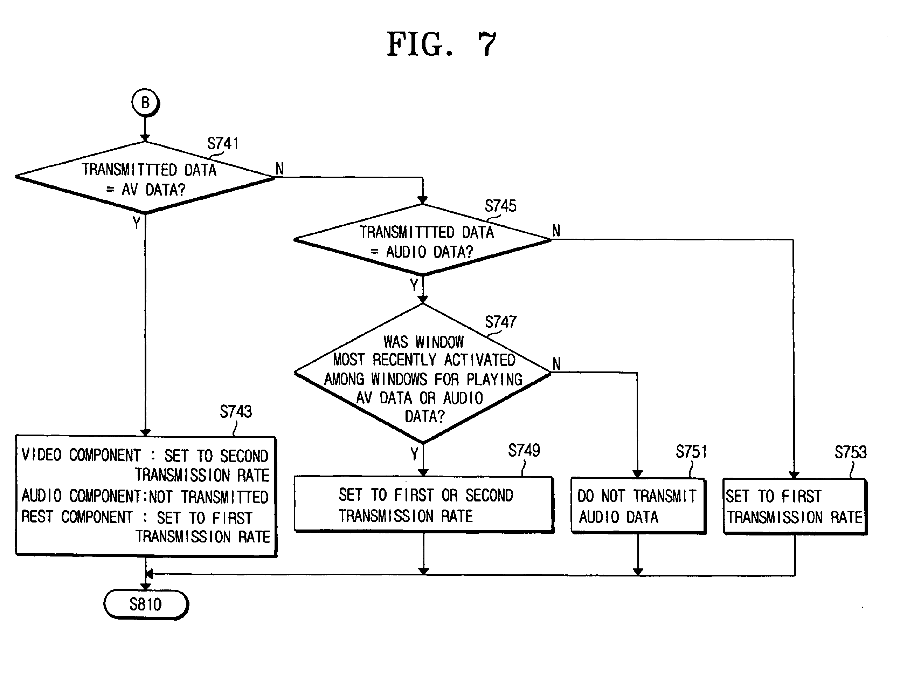

Now, setting of the transmission rate if it is judged at the step S717 that the window executed in the client is inactivated and is not covered with another window or if it is judged at the step S719 that the window is inactivated and a part of the window is covered with another window will be explained in detail with reference to FIG. 7.

Referring to FIG. 7, the transmission rate setting unit 150 judges the kind of data being played/displayed in the window of the client (steps S741 and S745).

If it is judged at the step S741 that the data being played in the window of the client, i.e., the transmitted data, is the AV data, the transmission rate setting unit 150 sets the transmission rates differently according to the components constituting the AV data (S743). Specifically, the transmission rate setting unit 150 sets the transmission rate of the video component of the AV data to the second transmission rate, sets the audio data so that the audio data is not transmitted, and sets the transmission rate of the rest component to the first transmission rate.

Referring to FIG. 9, the second window 920 is inactivated and corresponds to a window a part of which is covered and the data being played is the AV data. Accordingly, the video component constituting the AV data is transmitted at the second transmission rate to slightly deteriorate the resolution, the audio component is not transmitted, and the rest component (i.e., still image) is transmitted at the first transmission rate.

Meanwhile, the third window 930 is inactivated and corresponds to a window that is not covered and the data being played is the AV data. Accordingly, the video component constituting the AV data is transmitted at the second transmission rate to slightly deteriorate the resolution, and the audio component is not transmitted.

Referring back to FIG. 7, if it is judged at the step S745 that the data being played in the window of the client, i.e., the transmitted data, is the audio data, the transmission rate setting unit 150 judges whether the window in which the data is to be played was activated most recently among the windows for playing the AV data or the audio data (S747).

If it is judged at the step S747 that the window was activated most recently among the windows for playing the AV data or the audio data, the transmission rate setting unit 150 sets the data transmission rate to the first or second transmission rate (S749).

Referring to FIG. 9, the fourth window 940 is inactivated and corresponds to a window that is not covered and the data being played is the audio data. If it is assumed that the most recently activated window in the client as illustrated in FIG. 9 is the first window 910 and the fourth window 940 is the preceding window, the audio data played in the fourth window is outputted in the client since the audio data or the AV data is not played in the first window 910.

On the contrary, if it is judged at the step S747 that the window was not activated most recently among the windows for playing the AV data or the audio data, the transmission rate setting unit 150 sets the audio data so that the audio data is not transmitted to the client (S751).

Referring to FIG. 9, if it is assumed that the activation is in the order of the first window 910, the second window 920 and the fourth window 940 and the audio component is played in the second window 920, the audio component played in the second window 920 is outputted in the client and no audio data is played in the fourth window 940.

If it is judged at the steps S741 and S745 that the transmitted data is neither the AV data nor the audio data, in other words, that the transmitted data is the rest data (for example, text data or still image data), the transmission rate setting unit 150 sets the data transmission rate to the first transmission rate (S753).

Referring to FIG. 9, the fifth window 950 is inactivated and corresponds to a covered window and the data being played are the text data and the still image data. Accordingly, the data is transmitted at the first transmission rate.

Referring back to FIG. 6, if it is judged at the step S719 that the window executed in the client is inactivated and a part of the window is not covered with another window, the transmission rate setting unit 150 judges whether all parts of the window are covered with another window (S721), and if not, it judges whether the window is the minimized window (S723).

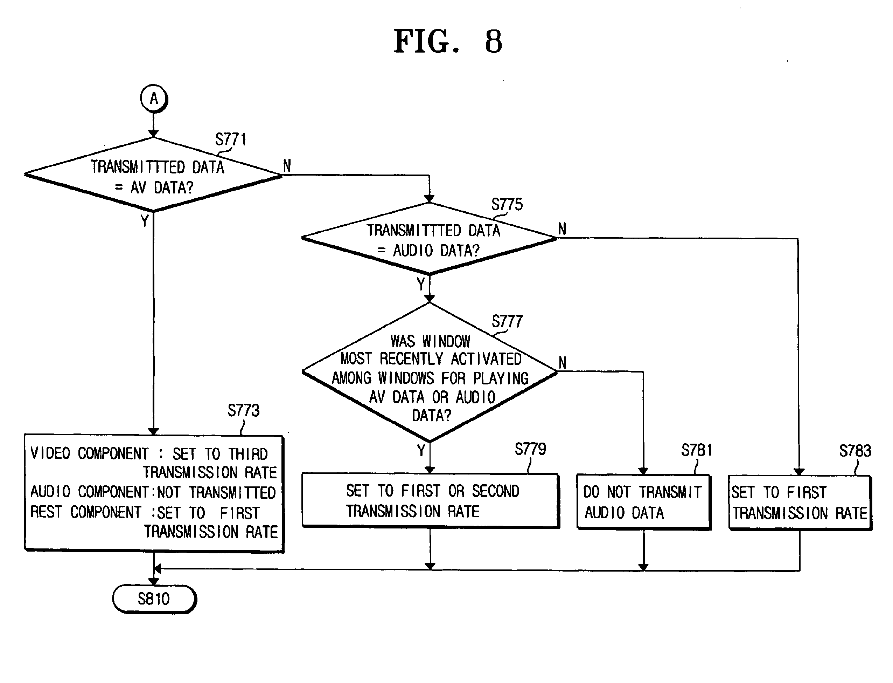

Now, the case that the window executed in the client at the step S721 is inactivated and all parts of the window are covered with another window or the case that the window is minimized will be explained in detail with reference to FIG. 8.

Referring to FIG. 8, the transmission rate setting unit 150 judges the kind of the data being played/displayed in the window of the client (S771 and S775).

If it is judged at the step S771 that the data being played in the window of the client, i.e., the transmitted data, is the AV data, the transmission rate setting unit 150 sets the transmission rate of the video component of the AV data to the third transmission rate, sets the audio component so that the audio component is not transmitted, and sets the transmission rate of the rest component to the first transmission rate (S773).

If it is judged at the step S775 that the data being played in the window of the client, i.e., the transmitted data, is the audio data, the transmission rate setting unit 150 judges whether the window in which the data is to be played was most recently activated among the windows for playing the AV data or the audio data (S777).

If it is judged at the step S777 that the window was most recently activated among the windows for playing the AV data or the audio data, the transmission rate setting unit 150 sets the data transmission rate to the first or second transmission rate (S779).

On the contrary, if it is judged at the step S777 that the window was not most recently activated among the windows for playing the AV data or the audio data, the transmission rate setting unit 150 sets the audio data so that the audio data is not transmitted to the client (S781).

If it is judged at the steps S771 and S775 that the transmitted data is neither the AV data nor the audio data, in other words, that the transmitted data is the rest data (for example, text data or still image data), the transmission rate setting unit 150 sets the data transmission rate to the first transmission rate (S783).

Referring to FIG. 9, the sixth window 960 corresponds to a minimized window and the data being played are the text data and the still image data. Accordingly, the data is transmitted at the first transmission rate.

Meanwhile, if it is judged at the step S711 as shown in FIG. 6 that the client operates in the screen saving mode, the transmission rate setting unit performs the steps S771 to S783 as shown in FIG. 8. Since the steps have already been explained, the detailed explanation thereof will be omitted.

Hereinafter, the steps after S700 which refer to the transmission rate setting step will be explained in detail with reference to FIG. 5.

If the setting of the transmission rate of the data to be played/displayed in the window executed in the respective client is completed at the step S700, the home network system 100 transmits the information about the set transmission rate to the respective clients (S810).

The respective clients set the receiving rates of the window (for example, media player) according to the information about the received transmission rates (S820).

Thereafter, the home network system 100 adjusts the transmission rate of the data to be transmitted to the client according to the transmission rate set at the step S700 (S830).

Then, the home network system 100 transmits the data to the respective client according to the adjusted transmission rate, and the transmitted data is played in the corresponding window of the corresponding client (S840).

In an embodiment of the present invention, the data transmission rate is classified into the first to third transmission rates, and the data is transmitted according to any one of the first to third transmission rates. However, this is just for the sake of convenience in explanation, and the kind of transmission rates may be differently set according to the kind of transmitted data.

As described above, according to an embodiment of the present invention, the transmission rate of the data being transmitted to the client can be adjusted according to the operation states of the connected clients, the states of windows being executed in the respective clients and the kind of data being played in the respective windows. Accordingly, even if the number of clients connected to the home network system or the number of windows being executed in the respective clients is increased, the whole data transmission speed of the home network system is not deteriorated and the transmission efficiency is not decreased.

The foregoing embodiments and advantages are merely exemplary and are not to be construed as limiting the present invention. The present teaching can be readily applied to other types of apparatuses. Also, the description of the embodiments of the present invention is intended to be illustrative, and not to limit the scope of the claims, and many alternatives, modifications, and variations will be apparent to those skilled in the art.

## Claims

1. A home network system (100) that performs a network matching between an external communication network (200) and a home network, the home network system comprising:
an external communication network interface unit (120) for providing an interface for data communications with the external communication network;
a home network interface unit (170, 180, 190) for providing an interface for data communications with the home network;
a storage unit (160) for storing information about windows executed in clients that constitute the home network; and
a transmission rate setting unit (150) for setting a transmission rate of data to be played in a first window with reference to the window information so that the data to be played is transmitted to the client in which the first window is executed at the set transmission rate.

2. The home network system as claimed in claim 1, wherein the transmission rate setting unit sets the transmission rate of the data to be played in the first window to a first transmission rate if the first window is activated, and sets the transmission rate of the data to be played in the first window to either of a second transmission rate and a third transmission rate if the first window is inactivated.

3. The home network system as claimed in claim 2, wherein the first transmission rate is higher than the second transmission rate, and the second transmission rate is higher than the third transmission rate.

4. The home network system as claimed in claim 3, wherein the transmission rate setting unit sets the transmission rate of the data according to a kind of the data to be played in the first window.

5. The home network system as claimed in claim 4, wherein, if the first window is inactivated and the data to be played in the first window is audio/video data that includes a video component, an audio component and a rest component, the transmission rate setting unit sets the transmission rate of the video component to the second transmission rate, sets the transmission rate of the rest component to the first transmission rate, and sets the audio component so that the audio component is not transmitted.

6. The home network system as claimed in claim 4, wherein, if the first window is inactivated and the data to be played in the first window is audio data, the transmission rate setting unit sets the transmission rate of the audio data to any one of the first to third transmission rates.

7. The home network system as claimed in claim 4, wherein, if the first window is inactivated and the data to be played in the first window is rest data, the transmission rate setting unit sets the transmission rate of the rest data to the first transmission rate.

8. The home network system as claimed in claim 7, wherein the rest data includes at least one of text data and still image data.

9. The home network system as claimed in claim 4, wherein, if the first window is inactivated, a part of the first window is covered with another window executed in the client and the data to be played in the window is audio/video data that includes a video component, an audio component and a rest component, the transmission rate setting unit sets the transmission rate of the video component to the second transmission rate, sets the transmission rate of the rest component to the first transmission rate, and sets the audio component so that the audio component is not transmitted.

10. The home network system as claimed in claim 4, wherein, if the first window is inactivated, all parts of the first window are covered with another window executed in the client, and the data to be played in the first window is audio/video data that includes a video component, an audio component and a rest component, the transmission rate setting unit sets the transmission rate of the video component to the third transmission rate, sets the transmission rate of the rest component to the first transmission rate, and sets the audio component so that the audio component is not transmitted.

11. The home network system as claimed in claim 4, wherein, if the first window is a minimized window and the data to be played in the first window is audio/video data that includes a video component, an audio component and a rest component, the transmission rate setting unit sets the transmission rate of the video component to the third transmission rate, sets the transmission rate of the rest component to the first transmission rate, and sets the audio component so that the audio component is not transmitted.

12. The home network system as claimed in claim 3, wherein, if the client operates in a screen saving mode and the data to be played in the first window is audio/video data that includes a video component, an audio component and a rest component, the transmission rate setting unit sets the transmission rate of the video component to the third transmission rate, sets the transmission rate of the rest component to the first transmission rate, and sets the audio component so that the audio component is not transmitted.

13. A method of adjusting a transmission rate of data to be transmitted to clients constituting a home network by a home network system that performs a network matching between an external communication network and a home network, the method comprising:
(a) receiving from the clients and storing (S600) information about windows executed in the clients;
(b) setting (S700; S711-S723, S741-S753, S771-S783) the transmission rate of the data to be played in a first window with reference to the window information; and
(c) transmitting (S840) the data to the client in which the first window is executed at the set transmission rate.

14. The method as claimed in claim 13, wherein the step (b) sets (S715) the transmission rate of the data to be played in the first window to a first transmission rate if the first window is activated, and sets (S743, S749, S773, S779) the transmission rate nf the data to be played in the first window to either of a second transmission rate and a third transmission rate if the first window is inactivated.

15. The method as claimed in claim 14, wherein the first transmission rate is higher than the second transmission rate, and the second transmission rate is higher than the third transmission rate.

16. The method as claimed in claim 15, wherein the step (b) sets the transmission rate of the data according to a kind of the data to be played in the first window.

17. The method as claimed in claim 16, wherein, if the first window is inactivated and the data to be played in the first window is audio/video data that includes a video component, an audio component and a rest component, the step (b) sets (S743) the transmission rate of the video component to the second transmission rate, sets the transmission rate of the rest component to the first transmission rate, and sets the audio component so that the audio component is not transmitted.

18. The method as claimed in claim 16, wherein, if the first window is inactivated and the data to be played in the first window is audio data, the step (b) sets the transmission rate of the audio data to any one of the first to third transmission rates.

19. The method as claimed in claim 16, wherein, if the first window is inactivated and the data to be played in the first window is rest data, the step (b) sets (S743, S773) the transmission rate of the rest data to the first transmission rate

20. The method as claimed in claim 19, wherein the rest data includes at least one of text data and still image data.

21. The method as claimed in claim 16, wherein, if the first window is inactivated, a part of the first window is covered with another window executed in the client, and the data to be played in the first window is audio/video data that includes a video component, an audio component and a rest component, the step (b) sets (S743) the transmission rate of the video component to the second transmission rate, sets the transmission rate of the rest component to the first transmission rate, and sets the audio component so that the audio component is not transmitted.

22. The method as claimed in claim 16, wherein, if the first window is inactivated, all parts of the first window are covered with another window executed in the client, and the data to be played in the first window is audio/video data that includes a video component, an audio component and a rest component, the step (b) sets (S773) the transmission rate of the video component to the third transmission rate, sets the transmission rate of the rest component to the first transmission rate, and sets the audio component so that the audio component is not transmitted.

23. The method as claimed in claim 16, wherein, if the first window is a minimized window and the data to be played in the first window is audio/video data that includes a video component, an audio component and a rest component, the step (b) sets (S773) the transmission rate of the video component to the third transmission rate, sets the transmission rate nf the rest component tn the first transmission rate, and sets the audio component so that the audio component is not transmitted.

24. The method as claimed in claim 15, wherein, if the client operates in a screen saving mode and the data to be played in the first window is audio/video data that includes a video component, an audio component and a rest component, the step (b) sets (S773) the transmission rate of the video component to the third transmission rate, sets the transmission rate of the rest component to the first transmission rate, and sets the audio component so that the audio component is not transmitted.

## Patentansprüche

1. Heim-Netzwerksystem (100), das eine Netzwerkanpassung zwischen einem externen Kommunikationsnetzwerk (200) und einem Heim-Netzwerk durchführt, wobei das Heim-Netzwerksystem umfasst:
eine Schnittstelleneinheit (120) des externen Kommunikationsnetzwerks zum Bereitstellen einer Schnittstelle für Datenübertragungen mit dem externen Kommunikationsnetzwerk;
eine Schnittstelleneinheit (170, 180, 190) des Heim-Netzwerks zum Bereitstellen einer Schnittstelle für Datenübertragen mit dem Heim-Netzwerk;
eine Speichereinheit (160) zum Speichern von Informationen über Fenster, die in Clients ausgeführt werden, die das Heim-Netzwerk bilden; und
eine Senderaten-Einstelleinheit (150) zum Einstellen einer Senderate von in einem ersten Fenster wiederzugebender Daten unter Bezugnahme auf die Fenster-Informationen, so dass die wiederzugebenden Daten zu dem Client, in dem das erste Fenster ausgeführt wird, mit der eingestellten Senderate gesendet werden.

2. Heim-Netzwerksystem nach Anspruch 1, wobei die Senderaten-Einstelleinheit die Senderate der in dem ersten Fenster wiederzugebenden Daten auf eine erste Senderate einstellt, wenn das erste Fenster aktiviert ist, und die Senderate der in dem ersten Fenster wiederzugebenden Daten entweder auf eine zweite Senderate oder eine dritte Senderate einstellt, wenn das erste Fenster nicht aktiviert ist.

3. Heim-Netzwerksystem nach Anspruch 2, wobei die erste Senderate höher ist als die zweite Senderate und die zweite Senderate höher ist als die dritte Senderate.

4. Heim-Netzwerksystem nach Anspruch 3, wobei die Senderaten-Einstelleinheit die Senderate der Daten entsprechend einem Typ der in dem ersten Fenster wiederzugebenden Daten einstellt.

5. Heim-Netzwerksystem nach Anspruch 4, wobei, wenn das erste Fenster nicht aktiviert ist und die in dem ersten Fenster wiederzugebenden Daten Audio-/Video-Daten sind, die eine Video-Komponente, eine Audio-Komponente und eine Rest-Komponente enthalten, die Senderaten-Einstelleinheit die Senderate der Video-Komponente auf die zweite Senderate einstellt, die Senderate der Rest-Komponente auf die erste Senderate einstellt und die Audio-Komponente so einstellt, dass die Audio-Komponente nicht gesendet wird.

6. Heim-Netzwerksystem nach Anspruch 4, wobei, wenn das erste Fenster nicht aktiviert ist und die in dem ersten Fenster wiederzugebenden Daten Audio-Daten sind, die Senderaten-Einstelleinheit die Senderate der Audio-Daten auf eine von der ersten bis zu der dritten Senderate einstellt.

7. Heim-Netzwerksystem nach Anspruch 4, wobei, wenn das erste Fenster nicht aktiviert ist und die in dem ersten Fenster wiederzugebenden Daten Rest-Daten sind, die Senderaten-Einstelleinheit die Senderate der Rest-Daten auf die erste Senderate einstellt.

8. Heim-Netzwerksystem nach Anspruch 7, wobei die Rest-Daten wenigstens Text-Daten oder Standbild-Daten enthalten.

9. Heim-Netzwerksystem nach Anspruch 4, wobei, wenn das erste Fenster nicht aktiviert ist, ein Teil des ersten Fensters von einem anderen Fenster überdeckt wird, das in dem Client ausgeführt wird, und die in dem Fenster wiederzugebenden Daten Audio-/Video-Daten sind, die eine Video-Komponente, eine Audio-Komponente und eine Rest-Komponente enthalten, die Senderaten-Einstelleinheit die Senderate der Video-Komponente auf die zweite Senderate einstellt, die Senderate der Rest-Komponente auf die erste Senderate einstellt und die Audio-Komponente so einstellt, dass die Audio-Komponente nicht gesendet wird.

10. Heim-Netzwerksystem nach Anspruch 4, wobei, wenn das erste Fenster nicht aktiviert ist, alle Teile des ersten Fensters von einem anderen Fenster überdeckt werden, das in dem Client ausgeführt wird, und die in dem ersten Fenster wiederzugebenden Daten Audio-/Video-Daten sind, die eine Video-Komponente, eine Audio-Komponente und eine Rest-Komponente enthalten, die Senderaten-Einstelleinheit die Senderate der Video-Komponente auf die dritte Senderate einstellt, die Senderate der Rest-Komponente auf die erste Senderate einstellt und die Audio-Komponente so einstellt, dass die Audio-Komponente nicht gesendet wird.

11. Heim-Netzwerksystem nach Anspruch 4, wobei, wenn das erste Fenster ein minimiertes Fenster ist und die in dem ersten Fenster wiederzugebenden Daten Audio-/Video-Daten sind, die eine Video-Komponente, eine Audio-Komponente und eine Rest-Komponente enthalten, die Senderaten-Einstelleinheit die Senderate der Video-Komponente auf die dritte Senderate einstellt, die Senderate der Rest-Komponente auf die erste Senderate einstellt und die Audio-Komponente so einstellt, dass die Audio-Komponente nicht gesendet wird.

12. Heim-Netzwerksystem nach Anspruch 3, wobei, wenn der Client in einem Bildschirmschoner-Modus arbeitet und die in dem ersten Fenster wiederzugebenden Daten Audio-/Video-Daten sind, die eine Video-Komponente, einen Audio-Komponente und eine Rest-Komponente enthalten, die Senderaten-Einstelleinheit die Senderate der Video-Komponente auf die dritte Senderate einstellt, die Senderate der Rest-Komponente auf die erste Senderate einstellt und die Audio-Komponente so einstellt, dass die Audio-Komponente nicht gesendet wird.

13. Verfahren zum Regulieren einer Senderate von Daten, die zu Clients, die ein Heim-Netzwerk bilden, durch ein Heim-Netzwerk zu senden sind, das eine Netzwerkanpassung zwischen einem externen Komrnunikationsnetzwerk und einem Heim-Netzwerk durchführt, wobei das Verfahren umfasst:
a) Empfangen und Speichern (S600) von Informationen von den Clients über Fenster, die in den Clients ausgeführt werden;
b) Einstellen (S700, S711-S723, S741-S753, S771-S783) der Senderate der in einem ersten Fenster wiederzugebenden Daten unter Bezugnahme auf die Fenster-Informationen; und
c) Senden (S840) der Daten zu dem Client, in dem das erste Fenster ausgeführt wird, mit der eingestellten Senderate.

14. Verfahren nach Anspruch 13, wobei mit dem Schritt b) die Senderate der in dem ersten Fenster wiederzugebenden Daten auf eine erste Senderate eingestellt wird (S715), wenn das erste Fenster aktiviert ist, und die Senderate der in dem ersten Fenster wiederzugebenden Daten entweder auf eine zweite Senderate oder auf eine dritte Senderate eingestellt wird (S743, S749, S773, S779), wenn das erste Fenster nicht aktiviert ist.

15. Verfahren nach Anspruch 14, wobei die erste Senderate höher ist als die zweite Senderate und die zweite Senderate höher ist als die dritte Senderate.

16. Verfahren nach Anspruch 15, wobei mit dem Schritt b) die Senderate der Daten entsprechend einem Typ der in dem ersten Fenster wiederzugebenden Daten eingestellt wird.

17. Verfahren nach Anspruch 16, wobei, wenn das erste Fenster nicht aktiviert ist und die in dem ersten Fenster wiederzugebenden Daten Audio-Nideo-Daten sind, die eine Video-Komponente, eine Audio-Komponente und eine Rest-Komponente enthalten, mit dem Schritt b) die Senderate der Video-Komponente auf die zweite Senderate einstellt wird (S743), die Senderate der Rest-Komponente auf die erste Senderate eingestellt wird und die Audio-Komponente so eingestellt wird, dass die Audio-Komponente nicht gesendet wird.

18. Verfahren nach Anspruch 16, wobei, wenn das erste Fenster nicht aktiviert ist und die in dem ersten Fenster wiederzugebenden Daten Audio-Daten sind, in dem Schritt b) die Senderate der Audio-Daten auf eine von der ersten bis zu der dritten Senderate eingestellt wird.

19. Verfahren nach Anspruch 16, wobei, wenn das erste Fenster nicht aktiviert ist und die in dem ersten Fenster wiederzugebenden Daten Rest-Daten sind, mit dem Schritt b) die Senderate der Rest-Daten auf die erste Senderate eingestellt wird (S743, S773).

20. Verfahren nach Anspruch 19, wobei die Rest-Daten wenigstens Text-Daten oder Standbild-Daten enthalten.

21. Verfahren nach Anspruch 16, wobei, wenn das erste Fenster nicht aktiviert ist, ein Teil des ersten Fensters von einem anderen Fenster überdeckt wird, das in dem Client ausgeführt wird, und die in dem ersten Fenster wiederzugebenden Daten Audio-/Video-Daten sind, die eine Video-Komponente, eine Audio-Komponente und eine Rest-Komponente enthalten, mit dem Schritt b) die Senderate der Video-Komponente auf die zweite Senderate eingestellt wird (S743), die Senderate der Rest-Komponente auf die erste Senderate eingestellt wird und die Audio-Komponente so eingestellt wird, dass die Audio-Komponente nicht gesendet wird.

22. Verfahren nach Anspruch 16, wobei, wenn das erste Fenster nicht aktiviert ist, alle Teile des ersten Fensters von einem anderen Fenster überdeckt werden, das in dem Client ausgeführt wird, und die in dem ersten Fenster wiederzugebenden Daten Audio-Nideo-Daten sind, die eine Video-Komponente, eine Audio-Komponente und eine Rest-Komponente enthalten, mit dem Schritt b) die Senderate der Video-Komponente auf die dritte Senderate eingestellt wird (S773), die Senderate der Rest-Komponente auf die erste Senderate eingestellt wird und die Audio-Komponente so eingestellt wird, dass die Audio-Komponente nicht gesendet wird.

23. Verfahren nach Anspruch 16, wobei, wenn das erste Fenster ein minimiertes Fenster ist und die in dem ersten Fenster wiederzugebenden Daten Audio-/Video-Daten sind, die eine Video-Komponente, eine Audio-Komponente und eine Rest-Komponente enthalten, mit dem Schritt b) die Senderate der Video-Komponente auf die dritte Senderate eingestellt wird (S773), die Senderate der Rest-Komponente auf die erste Senderate eingestellt wird und die Audio-Komponente so eingestellt wird, dass die Audio-Komponente nicht gesendet wird.

24. Verfahren nach Anspruch 15, wobei, wenn der Client in einem Bildschirmschoner-Modus arbeitet und die in dem ersten Fenster wiederzugebenden Daten Audio-/Video-Daten sind, die eine Video-Komponente, eine Audio-Komponente und eine Rest-Komponente enthalten, mit dem Schritt b) die Senderate der Video-Komponente auf die dritte Senderate eingestellt wird (S773), die Senderate der Rest-Komponente auf die erste Senderate eingestellt wird und die Audio-Komponente so eingestellt wird, dass die Audio-Komponente nicht gesendet wird.

## Revendications

1. Système de réseau domestique (100) qui effectue une adaptation de réseau entre un réseau de communication externe (200) et un réseau domestique, le système de réseau domestique comprenant :
une unité d'interface de réseau de communication externe (120) pour fournir une interface pour des communications de données avec le réseau de communication externe ;
une unité d'interface de réseau domestique (170, 180, 190) pour fournir une interface pour des communications de données avec le réseau domestique ;
une unité de stockage (160) pour stocker des informations sur des fenêtres exécutées dans des clients qui constituent le réseau domestique ; et
une unité de réglage du débit de transmission (150) pour régler un débit de transmission de données à lire dans une première fenêtre en référence aux informations de fenêtre, afin que les données à lire soient transmises au client dans lequel la première fenêtre est exécutée au débit de transmission réglé.

2. Système de réseau domestique selon la revendication 1, dans lequel l'unité de réglage du débit de transmission règle le débit de transmission des données à lire dans la première fenêtre à un premier débit de transmission si la première fenêtre est active, et règle le débit de transmission des données à lire dans la première fenêtre soit à un deuxième débit de transmission, soit à un troisième débit de transmission si la première fenêtre est inactive.

3. Système de réseau domestique selon la revendication 2, dans lequel le premier débit de transmission est plus élevé que le deuxième débit de transmission, et le deuxième débit de transmission est plus élevé que le troisième débit de transmission.

4. Système de réseau domestique selon la revendication 3, dans lequel l'unité de réglage du débit de transmission règle le débit de transmission des données selon un type des données à lire dans la première fenêtre.

5. Système de réseau domestique selon la revendication 4, dans lequel, si la première fenêtre est inactive et que les données à lire dans la première fenêtre sont des données audio/vidéo qui incluent une composante vidéo, une composante audio et une composante de silence, l'unité de réglage du débit de transmission règle le débit de transmission de la composante vidéo au deuxième débit de transmission, règle le débit de transmission de la composante de silence au premier débit de transmission, et règle le débit de transmission de la composante audio afin que la composante audio ne soit pas transmise.

6. Système de réseau domestique selon la revendication 4, dans lequel, si la première fenêtre est inactive et que les données à lire dans la première fenêtre sont des données audio, l'unité de réglage du débit de transmission règle le débit de transmission des données audio à n'importe lequel du premier au troisième débits de transmission.

7. Système de réseau domestique selon la revendication 4, dans lequel, si la première fenêtre est inactive et que les données à lire dans la première fenêtre sont des données de silence, l'unité de réglage du débit de transmission règle le débit de transmission des données de silence au premier débit de transmission.

8. Système de réseau domestique selon la revendication 7, dans lequel les données de silence incluent au moins un type de données parmi les données texte et les données d'images fixes.

9. Système de réseau domestique selon la revendication 4, dans lequel, si la première fenêtre est inactive, qu'une partie de la première fenêtre est recouverte par une autre fenêtre exécutée dans le client et que les données à lire dans la fenêtre sont des données audio/vidéo qui incluent une composante vidéo, une composante audio et une composante de silence, l'unité de réglage du débit de transmission règle le débit de transmission de la composante vidéo au deuxième débit de transmission, règle le débit de transmission de la composante de silence au premier débit de transmission et règle la composante audio afin que la composante audio ne soit pas transmise.

10. Système de réseau domestique selon la revendication 4, dans lequel, si la première fenêtre est inactive, que toutes les parties de la première fenêtre sont recouvertes par une autre fenêtre exécutée dans le client et que les données à lire dans la première fenêtre sont des données audio/vidéo qui incluent une composante vidéo, une composante audio et une composante de silence, l'unité de réglage du débit de transmission règle le débit de transmission de la composante vidéo au troisième débit de transmission, règle le débit de transmission de la composante de silence au premier débit de transmission et règle la composante audio afin que la composante audio ne soit pas transmise.

11. Système de réseau domestique selon la revendication 4, dans lequel, si la première fenêtre est une fenêtre réduite et que les données à lire dans la première fenêtre sont des données audio/vidéo qui incluent une composante vidéo, une composante audio et une composante de silence, l'unité de réglage du débit de transmission règle le débit de transmission de la composante vidéo au troisième débit de transmission, règle le débit de transmission de la composante de silence au premier débit de transmission et règle la composante audio afin que la composante audio ne soit pas transmise.

12. Système de réseau domestique selon la revendication 3, dans lequel, si le client opère dans un mode économiseur d'écran et que les données à lire dans la première fenêtre sont des données audio/vidéo qui incluent une composante vidéo, une composante audio et une composante de silence, l'unité de réglage du débit de transmission règle le débit de transmission de la composante vidéo au troisième débit de transmission, règle le débit de transmission de la composante de silence au premier débit de transmission et règle la composante audio afin que la composante audio ne soit pas transmise.

13. Procédé d'ajustement d'un débit de transmission de données à transmettre à des clients constituant un réseau domestique, par un système de réseau domestique qui effectue une adaptation de réseau entre un réseau de communication externe et un réseau domestique, le procédé comprenant les étapes consistant à :
(a) recevoir à partir des clients et stocker (S600) des informations sur les fenêtres exécutées dans les clients ;
(b) régler (S700, S711 à S723, S741 à S753, S771 à S783) le débit de transmission des données à lire dans une première fenêtre en référence aux informations de fenêtre ; et
(c) transmettre (S840) les données au client dans lequel la première fenêtre est exécutée au débit de transmission réglé.

14. Procédé selon la revendication 13, dans lequel l'étape (b) règle (S715) le débit de transmission des données à lire dans la première fenêtre à un premier débit de transmission si la première fenêtre est active, et règle (S743, S749, S773, S779) le débit de transmission des données à lire dans la première fenêtre à un débit de transmission parmi un deuxième et un troisième débit de transmission si la première fenêtre est inactive.

15. Procédé selon la revendication 14, dans lequel le premier débit de transmission est plus élevé que le deuxième débit de transmission, et le deuxième débit de transmission est plus élevé que le troisième débit de transmission.

16. Procédé selon la revendication 15, dans lequel l'étape (b) règle le débit de transmission des données selon le type de données à lire dans la première fenêtre.

17. Procédé selon la revendication 16, dans lequel, si la première fenêtre est inactive et que les données à lire dans la première fenêtre sont des données audio/vidéo qui incluent une composante vidéo, une composante audio et une composante de silence, l'étape (b) règle (S743) le débit de transmission de la composante vidéo au deuxième débit de transmission, règle le débit de transmission de la composante de silence au premier débit de transmission et règle la composante audio afin que la composante audio ne soit pas transmise.

18. Procédé selon la revendication 16, dans lequel, si la première fenêtre est inactive et que les données à lire dans la première fenêtre sont des données audio, l'étape (b) règle le débit de transmission des données audio à n'importe lequel des premier à troisième débits de transmission.

19. Procédé selon la revendication 16, dans lequel, si la première fenêtre est inactive et que les données à lire dans la première fenêtre sont des données de silence, l'étape (b) règle (S743, S773) le débit de transmission des données de silence au premier débit de transmission.

20. Procédé selon la revendication 19, dans lequel les données de silence incluent au moins un type de données parmi les données texte et les données d'image fixe.

21. Procédé selon la revendication 16, dans lequel, si la première fenêtre est inactive, qu'une partie de la première fenêtre est recouverte par une autre fenêtre exécutée dans le client, et que les données à lire dans la première fenêtre sont des données audio/vidéo qui incluent une composante vidéo, une composante audio et une composante de silence, l'étape (b) règle (S743) le débit de transmission de la composante vidéo au deuxième débit de transmission, règle le débit de transmission de la composante de silence au premier débit de transmission et règle la composante audio afin que la composante audio ne soit pas transmise.

22. Procédé selon la revendication 16, dans lequel, si la première fenêtre est inactive, que toutes les parties de la première fenêtre sont recouvertes par une autre fenêtre exécutée dans le client, et que les données à lire dans la première fenêtre sont des données audio/vidéo qui incluent une composante vidéo, une composante audio et une composante de silence, l'étape (b) règle (S773) le débit de transmission de la composante vidéo au troisième débit de transmission, règle le débit de transmission de la composante de silence au premier débit de transmission et règle la composante audio afin que la composante audio ne soit pas transmise.

23. Procédé selon la revendication 16, dans lequel, si la première fenêtre est une fenêtre réduite et que les données à lire dans la première fenêtre sont des données audio/vidéo qui incluent une composante vidéo, une composante audio et une composante de silence, l'étape (b) règle (S773) le débit de transmission de la composante vidéo au troisième débit de transmission, règle le débit de transmission de la composante de silence au premier débit de transmission et règle la composante audio afin que la composante audio ne soit pas transmise.

24. Procédé selon la revendication 15, dans lequel, si le client opère dans un mode économiseur d'écran et que les données à lire dans la première fenêtre sont des données audio/vidéo qui incluent une composante vidéo, une composante audio et une composante de silence, l'étape (b) règle (S773) le débit de transmission de la composante vidéo au troisième débit de transmission, règle le débit de transmission de la composante de silence au premier débit de transmission et règle la composante audio afin que la composante audio ne soit pas transmise.
